# EUROPEAN PATENT APPLICATION

(11) **EP 3 726 259 A1**
(43) Date of publication of application: **21.10.2020**
(21) Application number: 18887377.2
(22) Date of filing: 28.08.2018
(51) Int. Cl.: G01V 8/10, G08G 1/017, G08G 1/01

(54) **VEHICLE CHASSIS SCANNING SYSTEM AND SCANNING METHOD**

(30) Priority: 11.12.2017 CN 201711308811
(71) Applicant: Nuctech Company Limited, Beijing 100084 (CN)
(72) Inventor: LIN, Dong, Beijing 100084 (CN); CUI, Jin, Beijing 100084 (CN); HU, Bin, Beijing 100084 (CN); ZHANG, Yanchao, Beijing 100084 (CN); ZHANG, Qing, Beijing 100084 (CN); TAN, Xianshun, Beijing 100084 (CN); ZENG, Junhui, Beijing 100084 (CN)
(74) Representative: Held, Stephan
(86) International application number: PCT/CN2018/102630
(87) International publication number: WO 2019/114321

(57) **Abstract**

The present disclosure relates to a vehicle chassis scanning system and a scanning method. The scanning system includes: a travelling apparatus (1); a line array camera (4) and a first local camera (2), arranged on the travelling apparatus (1); and a controller (5), configured to cause the travelling apparatus (1) to move to under a vehicle chassis to photograph a vehicle bottom by the line array camera (4) to obtain a photo of part or all of a vehicle chassis, and cause the travelling apparatus (1) to move to a suspicious region to photograph the suspicious region locally by the first local camera (2). The scanning system is convenient to use, can reduce the labor intensity of an operator, can obtain the vehicle bottom photo for comprehensive inspection and also can inspect the suspicious region at the bottom of the vehicle targetedly and focusedly, thereby enhancing the reliability of scanning and inspecting suspicious articles carried on the vehicle chassis and improving the inspection efficiency.

## Description

### CROSS-REFERENCE TO RELATED APPLICATIONS

The present application claims priority of Chinese application No. 201711308811.8, filed on December 11, 2017. The disclosed content of the Chinese application is hereby entirely incorporated into the present disclosure.

### FIELD OF THE DISCLOSURE

The present disclosure relates to the technical field of vehicle safety inspection, and in particular, relates to a vehicle chassis scanning system and a scanning method.

### BACKGROUND OF THE DISCLOSURE

At present, vehicle chassis inspection devices are mostly distributed in highway checkpoints, frontier inspection, jails, important meetings and security places, and are used to inspect the problems of drugs, explosives and guns hidden in the vehicle chassis, chassis refit and the like.

The existing vehicle chassis inspection device mainly includes a fixed vehicle bottom inspection system and a handheld vehicle bottom inspection mirror. The fixed vehicle bottom inspection system is complex to mount and debug and cannot inspect the chassis of the stationary vehicle. The handheld vehicle bottom inspection mirror requires the operator to stretch the inspection rod into the vehicle bottom space manually, which has the problems of inconvenient use, high labor intensity of the operator and the like.

### SUMMARY OF THE DISCLOSURE

An objective of the present disclosure is to provide a vehicle chassis scanning system and a scanning method to scan and inspect the vehicle chassis flexibly and conveniently according to requirements.

According to a first aspect of the present disclosure, a vehicle chassis scanning system is provided. The vehicle chassis scanning system includes:
a travelling apparatus;
a line array camera and a first local camera, arranged on the travelling apparatus; and
a controller, configured to cause the travelling apparatus to move to under a vehicle chassis to photograph a vehicle bottom by the line array camera to obtain a photo of part or all of a vehicle chassis, and cause the travelling apparatus to move to a suspicious region to photograph the suspicious region locally by the first local camera.

In some embodiments, the controller is configured to judge whether a suspicious article is existed in the photo of the vehicle bottom, and cause the travelling apparatus to move to the suspicious region corresponding to the suspicious article when judging that the suspicious article is existed in the photo of the vehicle bottom.

In some embodiments, the controller is configured to cause the travelling apparatus to move to the suspicious region corresponding to a suspicious article when receiving a suspicious article instruction command in the photo of the vehicle bottom.

In some embodiments, the vehicle chassis scanning system further comprising a second local camera arranged on the travelling apparatus, wherein the controller is configured to identify a license plate number from a photo or a video taken by the second local camera to judge whether the identified license plate number is valid.

In some embodiments, the controller is configured to automatically judge whether the identified license plate number is valid, wherein a criterion for judgment comprising at least one of the following criteria: whether the digits of the license plate number is correct, whether the naming rule of the license plate is met, whether the license plate number is in a list of license plates of vehicles declared for detection and whether the photo or video is complete; or
the controller is configured to judge whether the identified license plate number is valid according to a confirmation instruction input by a user, the user inputting an instruction for confirming whether the license plate number is valid according to whether the license plate number in the photo or video seen by naked eyes is consistent with the identified license plate number.

In some embodiments, the first local camera is arranged on a rotation axis of the travelling apparatus.

In some embodiments, an angle compensation mechanism is arranged on the travelling apparatus and is configured to perform angle compensation when the travelling apparatus rotates, so as to maintain a photographing angle of the first local camera unchanged when the travelling apparatus rotates.

In some embodiments, the angle compensation mechanism comprises a steering engine, the first local camera being arranged at an output end of the steering engine, and the steering engine being configured to drive the first local camera to rotate reversely when the travelling apparatus rotates, so as to maintain a photographing angle of the first local camera unchanged.

In some embodiments, the first local camera is arranged at the top of the travelling apparatus, and/or the line array camera is arranged at the rear of the travelling apparatus.

In some embodiments, the vehicle chassis scanning system further comprising a distance measuring sensor, the distance measuring sensor being configured to detect whether a barrier is present above the travelling apparatus, and the controller being configured to judge whether the travelling apparatus enters under the vehicle chassis after receiving a detection signal of the distance measuring sensor.

In some embodiments, the controller comprises:
a control board, arranged on the travelling apparatus; and
a remote control terminal, configured to transmit a remote control signal to the control board to control at least one of the motion trail and the posture transformation of the travelling apparatus and the photographing angle of the first local camera.

In some embodiments, the control terminal comprises a display unit, the display unit being configured to receive and display the photo of the vehicle bottom taken by the line array camera and a real-time video taken by the first local camera and the second local camera.

In some embodiments, the controller further comprises a driver and a driving mechanism, which are arranged on the travelling apparatus; and the travelling apparatus comprises a travelling part, the travelling part comprising damping crawler belts arranged on a left side and a right side of a main body part, and the control board being configured to transmit a motion instruction to the driver after receiving the signal of the control terminal so as to control the driving mechanism to drive the crawler belts on the two sides to move.

In some embodiments, the travelling apparatus is a mobile robot.

According to a second aspect of the present disclosure, a vehicle chassis scanning method is provided. The vehicle chassis scanning method includes:
causing the travelling apparatus to move to under the vehicle chassis to take a photo of part or all of the vehicle bottom by the line array camera; and
causing the travelling apparatus to move to the suspicious region to photograph the suspicious region locally by the first local camera.

In some embodiments, after taking the photo of part or all of the vehicle bottom by the line array camera, the method further comprising:
judging whether a suspicious article is existed in the photo of the vehicle bottom, and if the suspicious article is existed, causing the travelling apparatus to move to the suspicious region to photograph the suspicious region locally by the first local camera.

In some embodiments, before causing the travelling apparatus to move to under the vehicle chassis, the method further comprising:
taking a photo or video of a license plate number of a to-be-inspected vehicle by a second local camera;
identifying the license plate number from the photo or video taken by the second local camera; and
judging whether the identified license plate number is valid.

In some embodiments, judging whether the identified license plate number is valid specifically comprises the following steps:
judging whether the license plate number is valid automatically according to at least one of whether the digits of the identified license plate number is correct, whether the naming rule of the license plate is met, whether the license plate number is in a list of license plates of vehicles declared for detection and whether the photo or video is complete; or
receiving an instruction input by a user for confirming whether the license plate number is valid according to whether the license plate number in the photo or video seen by naked eyes is consistent with the identified license plate number, and then judging whether the identified license plate number is valid according to the confirmation instruction input by the user.

In some embodiments, in case of judging that the identified license plate number is invalid, the method further comprising:
providing another identified alternative license plate number by the controller to facilitate second judgment; or directly receiving the input correct license plate number by the controller.

In some embodiments, if the conclusion of the controller is still invalid after second judgment, the method further comprising:
adjusting a photographing angle, a position and/or a focal length of the second local camera by the controller;
taking a photo or video of the license plate number of the to-be-inspected vehicle by the second local camera again; and
identifying the license plate number by the controller for the second time from the photo or video taken again by the second local camera.

In some embodiments, the controller comprises an industrial personal computer and a remote control terminal; and taking a photo of part or all of the vehicle bottom by the line array camera specifically comprises the following steps:
reading photographing information of the line array camera in real time by the industrial personal computer;
performing image stitching on the read photographing information by the industrial personal computer to form a photo of part or all of the vehicle bottom; and
transmitting the photo of the vehicle bottom to the control terminal by the industrial personal computer.

In some embodiments, after taking the photo of part or all of the vehicle bottom by the line array camera, the method further comprising:
causing the travelling apparatus to move out of the vehicle chassis; and
causing the travelling apparatus to move to under the vehicle chassis when judging that a suspicious article is existed in the photo of the vehicle bottom.

According to a third aspect of the present disclosure, a vehicle chassis scanning system is provided. The vehicle chassis scanning system includes a travelling apparatus;
a first local camera, arranged on the travelling apparatus; and
a controller, configured to cause the travelling apparatus to move to a suspicious region to photograph the suspicious region locally by the first local camera;
wherein an angle compensation mechanism is arranged on the travelling apparatus and is configured to perform angle compensation when the travelling apparatus rotates, so as to maintain a photographing angle of the first local camera unchanged when the travelling apparatus rotates.

In some embodiments, the angle compensation mechanism comprises a steering engine, a main body of the steering engine being fixed on the travelling apparatus, the first local camera being arranged at an output end of the steering engine, and the steering engine being configured to drive the first local camera to rotate reversely when the travelling apparatus rotates, so as to maintain a photographing angle of the first local camera unchanged.

In some embodiments, the first local camera is arranged on a rotation axis of the travelling apparatus.

Based on the above technical solution, in the vehicle chassis scanning system according to an embodiment of the present disclosure, the line array camera and the first local camera are arranged on the travelling apparatus; and the controller can cause the travelling apparatus to move to under the vehicle chassis to take a photo of part or all of the vehicle bottom by the line array camera, and the controller can cause the travelling apparatus to move to the suspicious region to photograph the suspicious region locally by the first local camera. The scanning system is convenient to use, can reduce the labor intensity of an operator, can obtain the photo of the vehicle bottom for comprehensive inspection and also can inspect the suspicious region at the bottom of the vehicle targetedly and focusedly, thereby enhancing the reliability of scanning and inspecting the problems of suspicious articles carried on the vehicle chassis or chassis refit and the like, and improving the inspection efficiency.

### BRIEF DESCRIPTION OF THE ACCOMPANYING DRAWINGS

The accompanying drawings described herein are intended to further understand the disclosure and constitute a part of the application; and the schematic embodiments of the present disclosure and the description thereof are intended to explain the disclosure and do not constitute improper limitations to the present disclosure. In the accompanying drawings:
FIG. 1 is a schematic diagram of module composition of an embodiment according to a vehicle chassis scanning system of the present disclosure;
FIG. 2 is a schematic diagram of module composition of another embodiment according to a vehicle chassis scanning system of the present disclosure;
FIG. 3 is a flow schematic diagram of an embodiment according to a vehicle chassis scanning method of the present disclosure; and
FIG. 4 is a flow schematic diagram of a specific embodiment according to a vehicle chassis scanning method of the present disclosure.

### DETAILED DESCRIPTION OF THE PREFERRED EMBODIMENTS

The present disclosure is described hereinafter in detail. In the following paragraphs, different aspects of embodiments are defined in detail. The aspects defined may be combined with one or more of any other aspects unless it is explicitly pointed that they cannot be combined. In particular, any features considered to be preferred or favorable may be combined with one or more of other features considered to be preferred or favorable.

The terms "first", "second" and the like appearing in the present disclosure are only intended for convenience of description so as to distinguish different components with the same name and do not represent a sequence or a primary and secondary relationship.

In the description of the present disclosure, it should be understood that an azimuth or position relationship indicated by terms "upper", "lower", "left", "right", "front", "rear", "inner" and "outer" and the like is an azimuth or position relationship based on the accompanying draws, which is only for convenient description of the present disclosure, but not indicates or implies that the referred device must have a specific azimuth and perform construction and operation in the specific azimuth; therefore, it cannot be interpreted as a limitation to the protection scope of the present disclosure.

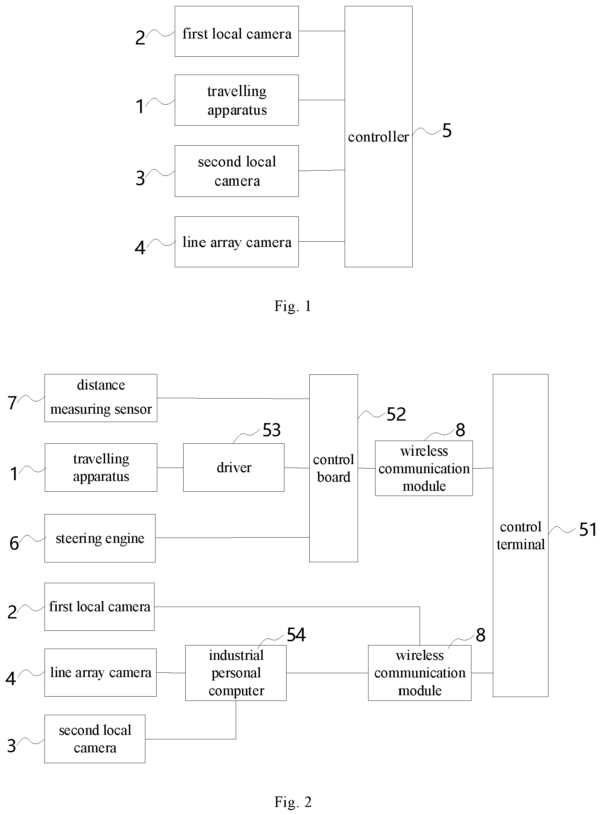

To improve convenience and efficiency of scanning a vehicle chassis, the present disclosure firstly provides a vehicle chassis scanning system ("scanning system" for short hereinafter). In a schematic embodiment, referring to FIG. 1, the scanning system includes a controller 5, a travelling apparatus 1, a line array camera 4 and a first local camera 2; wherein the travelling apparatus 1 may be a mobile robot, a remote control car or the like; the line array camera 4 and the first local camera 2 are arranged on the travelling apparatus 1; and the controller 5 can cause the travelling apparatus 1 to move to under the vehicle chassis according to scanning requirements to take a photo of part or all of the vehicle bottom by the line array camera 4 and also cause the travelling apparatus 1 to move to a suspicious region at the bottom of the vehicle to photograph the suspicious region locally by the first local camera 2.

The line array camera 4 and the first local camera 2 may singly scan according to the requirement to inspect a suspicious article, and may also combine the two scanning modes to inspect the suspicious article. Optionally, the first local camera 2 is mounted at the top of the travelling apparatus 1, such that a clear photographing effect can be obtained at a short distance. The line array camera 4 may be mounted at the rear of the travelling apparatus 1, for example, in the movement process of the travelling apparatus 1 from a tail part of the vehicle to a front part along a center of the vehicle, the line array camera 4 can gradually obtain a linear array image in a width direction of the vehicle, and finally a photo of part or all of the vehicle bottom is formed through software stitching. In addition, the line array camera 4 and the first local camera 2 may be arranged at other positions of the travelling apparatus 1 according to requirements.

The scanning system can cause the travelling apparatus to enter under the vehicle chassis and realizes automatically scanning through the movement of the scanning system. The scanning system is convenient to use, can reduce the labor intensity of an operator, can perform comprehensive and efficient inspection through the photo of the vehicle bottom obtained by the line array camera, and can also inspect the suspicious region at the bottom of the vehicle targetedly and focusedly through local photographing. Therefore, the scanning system is flexible to use, can enhance the reliability of scanning and inspecting suspicious articles carried on the vehicle chassis and can improve the inspection efficiency.

In the photo of the vehicle bottom taken by the line array camera 4, the controller 5 can compare the photographed vehicle bottom photo with a prestored normal vehicle bottom photo and judge whether a suspicious article is existed in the vehicle bottom photo, and causes the travelling apparatus 1 to move to a suspicious region corresponding to the suspicious article when judging that the suspicious article is present in the photo of the vehicle bottom, thereby facilitating further local scanning. In this way, the automation degree and efficiency of the scanning system can be improved, the time required for manually viewing the vehicle bottom photo can be reduced, and influence by the operator's experience is avoided. The suspicious articles include hidden drugs, explosives and guns as well as abnormal structures after the chassis is refitted, and the like.

In some embodiments, the operator can also judge whether the suspicious article is existed in the photo of the vehicle bottom taken by the line array camera 4 through naked eyes, and can transmit a suspicious instruction command to the controller 5 if the suspicious article is found, thereby facilitating further local scanning. The controller 5 can cause the travelling apparatus 1 to move to a suspicious region corresponding to the suspicious article to perform local scanning when receiving the suspicious instruction command in the photo of the vehicle bottom. In this way, it is more flexible to judge the suspicious article, and it is convenient to judge some special suspicious articles or previous unknown suspicious articles according to the experience of the operator, thereby reducing the possibility of missing inspection.

Moreover, the scanning system according to the present disclosure further includes a second local camera 3 arranged on a front part of the travelling apparatus 1, for example on a front part of a robot. When moving towards the vehicle from the front or the back of the vehicle, the robot will face the license plate number, and thus the robot can photograph the license plate number of a to-be-inspected vehicle and can photograph the front road condition in the travelling process. Of course, the second local camera 3 may further be arranged on a middle part or a rear part of the robot as long as the camera 3 can face the license plate and photograph the license plate number.

As shown in FIG. 2, the controller 5 includes an industrial personal computer 54. The industrial personal computer 54 can automatically identify the license plate number by reading the photo or video taken by the second local camera 3. Whether the identified license plate number is valid can be judged by the industrial personal computer 5 or the operator. Whether the photographed license plate number is valid may be judged by an automatic intelligent method or a manual method.

When the automatic intelligent method is used to perform judgment, whether the license plate number is valid may be judged by the controller according to predetermined criteria such as whether the digits of the license plate number is correct, whether the naming rule of the license plate is met, whether the license plate number is in a list of license plates of vehicles declared for detection and whether the photo or video is complete. By the method, the efficiency of identifying the license plate number can be improved and the automation degree of the scanning system can be increased.

When the manual method is used to perform judgment, the photo or video of the license plate taken by the second local camera 3 and the identified license plate number are presented to the operator and the operator may observe whether the identified number is correct directly through naked eyes. Of course, if the operator only sees the identified license plate number and does not see the photo, the operator may also perform judgment according to the above criteria. The operator may click a "invalid" button in a window to inform the system that the identified license plate number is invalid.

When the industrial personal computer or the operator judges that the identified license plate number is invalid (wrong), the industrial personal computer may transmit another identified possible alternative license plate number to a judgment module or present the identified possible alternative license plate number to the operator for second judgment.

Further, when the conclusion of the second judgment is still invalid, the following operation is performed: if under the automatic judgment mechanism, the industrial personal computer may control the second local camera 3 or the robot to adjust a photographing angle or position, even a focal length to take a photo again and then performs second identification. If under the manual judgment mechanism, firstly, the operator judges whether the photographed license plate photo is complete and clear; if the photo is complete and clear, the operator may manually input the license plate number according to the shot photo or video; and if the photo is not complete and clear, the industrial personal computer may control the second local camera 3 or the robot to adjust a photographing angle or position, even a focal length to take a clear photo, and then performs second identification.

In some embodiments, under the manual judgment mechanism, the operator may manually input the license plate number directly according to the complete and clear photo and it is unnecessary to pop up the alternate license plate number after the conclusion of the first judgment is invalid. By a mode of manually inputting the license plate number, the correct license plate number can be input rapidly, directly and accurately when the controller 5 judges that the license plate number is invalid, thus avoiding spending more time in this phase.

When the identified license plate number is judged to be valid or the operator manually inputs the license plate number, the controller 5 firstly stores the license plate number and then informs the system to prepare for storing other information (such as the entire image of the vehicle chassis) of the vehicle taken later and the license plate number correspondingly so as to facilitate subsequent search.

After the valid license plate number is stored, the travelling apparatus 1 moves under the vehicle chassis.

The travelling apparatus 1 may has the functions of moving and transforming posture, such that all photographing components on the travelling apparatus 1 can perform photographing flexibly from required angles. In the actual detection process, the travelling apparatus 1 often needs to change the forward direction by rotating so as to move to an expected position or move from a suspicious region to another suspicious region; however, in the rotation process, the first local camera 2 directly mounted on the travelling apparatus 1 may rotate along with the travelling apparatus 1, resulting in that the shot video shakes or the photo becomes blurred; and more importantly, the direction of the chassis photo taken later is inconsistent with the direction of the chassis photo taken before, and the photo cannot be synchronously compared with the photo taken by the line array camera, and thus the operator may be confused and it is difficult to accurately position and operate.

In the process of performing local scanning, an angle compensation mechanism may be arranged on a robot body, so as to facilitate synchronous comparison with the photo taken by the line array camera and prevent the shot video from shaking or prevent the shot photo from becoming blurred when the robot rotates. The present disclosure illustrates by taking the case where a travelling apparatus 1 is a mobile robot as an example. A first local camera 2 is mounted at an output end of an angle compensation mechanism, and the angle compensation mechanism is used to perform angle compensation when the robot rotates, thereby maintaining a photographing angle of the first local camera 2 unchanged when the robot rotates.

For example, when a suspicious position at the vehicle bottom is observed, the robot sometimes needs to rotate and then move towards a predetermined direction, and the angle compensation mechanism may drive the first local camera 2 through the controller 5 to rotate towards a direction opposite to the predetermined direction by the same angle, such that the photographing angle of the first local camera 2 remains unchanged, the video display in the suspicious region maintains stable and shaking of the video picture caused by rotation of the robot is avoided, thereby enabling an observer to analyze and observe the video more accurately and improving the accuracy of suspicious observation.

Specifically, as shown in FIG. 2, the angle compensation mechanism may include a steering engine 6, the first local camera 2 is mounted on a output shaft of a motor of the steering engine 6 or is mounted on a steering wheel, and the first local camera 2 is arranged upward to photograph the vehicle chassis. The steering engine 6 can drive the first local camera 2 to rotate reversely when the robot rotates. In some embodiments, an axis of a center shaft of the first local camera 2 and an axis of the motor output shaft of the steering engine 6 maintain consistent. In other embodiments, a center shaft of the first local camera 2, a motor output shaft of the steering engine and a rotation axis of the robot maintain consistent, thereby accurately enabling the photographing angle of the first local camera 2 to remain unchanged and maintaining stability of the video picture. Of course, a mode of arranging the first local camera 2 on a robot body by deviating from the rotation axis of the robot body is within the protection scope of the present disclosure. Alternately, the angle compensation mechanism may further be other electric actuating mechanisms capable of outputting rotary motion.

To ensure the motion safety of the travelling apparatus 1, the scanning system according to the present disclosure may further includes a distance measuring sensor 7, wherein the distance measuring sensor 7 is arranged at the top of the travelling apparatus 1 and is used to detect whether a barrier is present above the travelling apparatus 1; and the controller 5 can judge whether the travelling apparatus 1 enters or drives under the vehicle chassis after receiving a detection signal of the distance measuring sensor 7 so as to obtain valid vehicle bottom scanning videos and photos.

As shown in FIG. 2, the controller 5 in the foregoing embodiments includes a remote control terminal 51 and a control board 52 arranged on the travelling apparatus 1, wherein the control terminal 51 can transmit a remote control signal to the control board 52 to control at least one of the motion trail and the posture transformation of the travelling apparatus 1 and the photographing angle of the first local camera 2.

In some embodiments, the control terminal 51 may select a handheld terminal, for example an individual soldier terminal and the like. For example, the control terminal 51 may control the robot to move forward and backward, turn and rotate, and may further control the output shaft of the steering engine 6 to rotate to adjust the photographing an of the first local camera 2.

To facilitate remote control on the rotation of the travelling apparatus 1 and the first local camera 2 by the control terminal 51, a control component, for example a rocker or a virtual button and the like, may be arranged on the control terminal 51 (such as the individual soldier terminal). The motion trail and posture transformation of the travelling apparatus 1 may be controlled by the rocker, or rotation of the steering engine 6 may be controlled by the button to drive the first local camera 2 to rotate.

Moreover, the control terminal 51 further includes a display unit, wherein the display unit is used to receive and display the vehicle photo taken by the line array camera 4 and the real-time videos taken by the first local camera 2 and the second local camera 3. A video window in the display unit may switch to display video images of the first local camera 2 and the second local camera 3, and a status window displays status information of the travelling apparatus 1 such as the robot and the like.

The controller 5 further includes a driver 53 and a driving mechanism arranged on the travelling apparatus 1, wherein the travelling apparatus 1 is provided with a travelling part; the travelling part includes damping clawer belts arranged on a left side and a right side of a robot body; and the control board 52 can transmit a motion instruction to the driver 53 after receiving a signal of the control terminal 51 so as to control the driving mechanism to drive the damping crawler belts on the two sides to move. For example, the driving mechanism may be a servo motor with encoder feedback and the like. The crawler belts may include 4 to 10 groups of damping supporting wheels, and the servo motor drives the crawler belt on the corresponding side to move. When it is necessary to control the travelling apparatus 1 to move, the control terminal 51 transmits a control signal to the control board 52, and the control board 52 transmits a motion instruction to the driver 53 to drive the servo motor to drive the damping crawler belts to move. Through motion of the damping crawler belts, the robot may move forward and backward, turn, rotate in situ so as to move in the vehicle bottom space flexibly; therefore, the camera may photograph a part to be observed at a better angle, and the robot may drive into or drive out of the vehicle bottom from a convenient position. Alternatively, the travelling part may further be a part capable of realizing a walking function, such as a wheel and the like.

By adoption of the damping crawler belts, shaking of the camera caused by an uneven road surface can be reduced, the shot vehicle bottom photo has more excellent quality, the shot real-time video is displayed stably, and the accuracy of scanning the suspicious article can be improved.

As the vehicle bottom is dark, a light supplementing lamp is arranged on the travelling apparatus 1, and the controller 5 can turn on the light supplementing lamp to enhance the illumination intensity when taking a photo of the vehicle bottom by the line array camera 4 or observing a suspicious region by the first local camera 2. When the travelling apparatus 1 drives out of the vehicle bottom, the light supplementing lamp is turned off.

The travelling apparatus 1 is provided with a battery for providing power for all modules in the travelling apparatus 1; furthermore, the battery has a function of self-checking electric quantity, and the control board 52 may read the electric quantity of the battery.

In a specific embodiment, a first local camera 2 and a distance measuring sensor 7 are arranged at the top of a robot body, a second local camera 3 is arranged on a front part of the robot body, and a line array camera 4 is arranged on a rear part of the robot body. A controller 5 includes a handheld remote control terminal 51, a wireless communication module 8, a control board 52, a driver 53 and an industrial personal computer 54. Wherein information may be transmitted between the control terminal 51 and the control board 52 or between the control terminal 51 and the industrial personal computer 54 through a wireless communication module 8, bidirectional data transmission can be realized, and videos taken by the first local camera 2 and the second local camera 3 may be transmitted back to the control terminal 51.

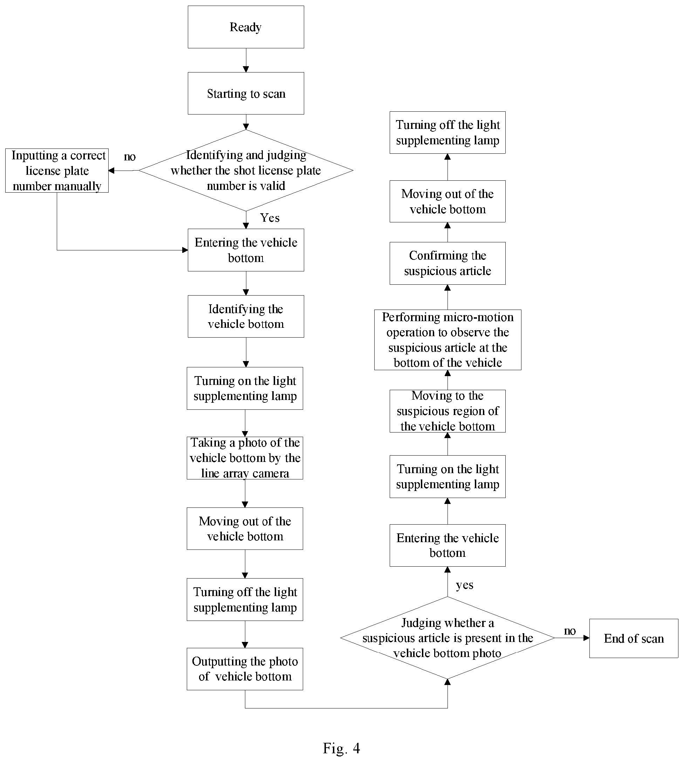

A working principle of the scanning system according to the present disclosure is illustrated hereinafter with reference to a flowchart shown in FIG. 4.

When a to-be-inspected vehicle stops, the preparatory work is started. Firstly, the robot is placed in front of or at the back of the vehicle, the robot and the control terminal 51 are in a startup status, and the operator starts a scanning flow by the control terminal 51.

Then, the control terminal 51 controls the robot to move close to the vehicle from the front or back of the vehicle, and the video taken by the second local camera 3 may be transmitted to the control terminal 51 through the wireless communication module 8, thus enabling the operator to observe the road condition. The industrial personal computer 54 may further read the video taken by the second local camera 3, identify the license plate number by software and judge whether the license plate number is valid; if the license plate number is valid, the license plate number is stored; if the license plate number is invalid, the industrial personal computer 54 may further judge or identify a correct license plate number through the foregoing method, or a correct license plate number is manually input and stored. The industrial personal computer 54 informs the system to prepare for storing other information (such as the image of the vehicle chassis and the like) of the vehicle taken later and the license plate number correspondingly. Then, the robot moves under the vehicle chassis by the control terminal 51 to performing scanning and inspection.

After the robot enters under the vehicle chassis, a detection signal of the distance measuring sensor 7 is changed and identifies that the robot has entered the vehicle bottom and the status is transmitted to the industrial personal computer 54; meanwhile, the control board 52 turns on the light supplementing lamp. The robot moves along a center line and a length direction of the vehicle, and a camera lens is arranged in the line array camera 4. In the motion process, the line array camera 4 can shoot a linear array image in a width direction of the vehicle, the industrial personal computer 54 obtains photographing information of the line array camera 4 in real time, image stitching is started by software, and the entire vehicle bottom photo may be obtained with the robot moves to the other end of the vehicle. The robot may drive out of the vehicle bottom and the control board 52 turns off the light supplementing lamp. Whether a suspicious article is existed in the vehicle bottom photo is judged by software in the industrial personal computer 54, or the photo of the vehicle bottom is transmitted to the control terminal 51 to enable the operator to judge whether a suspicious article is present, and a suspicious region corresponding to the suspicious article is observed locally if the suspicious article is existed.

The robot moves to the suspicious region at the vehicle bottom by the control terminal 51; meanwhile, the control board 52 turns on the light supplementing lamp to perform micro-motion operation on the robot and the first local camera 2 to observe the suspicious article at the vehicle bottom, a video taken by the first local camera 2 is transmitted to the control terminal 51 through the wireless communication module 8, and a video window of the control terminal 51 is switched to the first local camera 2 for the operator to observe the suspicious article. If local observation is unclear, the photographing angle of the first local camera 2 may be changed for further observation. The control terminal 51 may store the video of the first local camera 2. After the suspicious article is confirmed, the robot drives out of the vehicle bottom and turns off the light supplementing lamp.

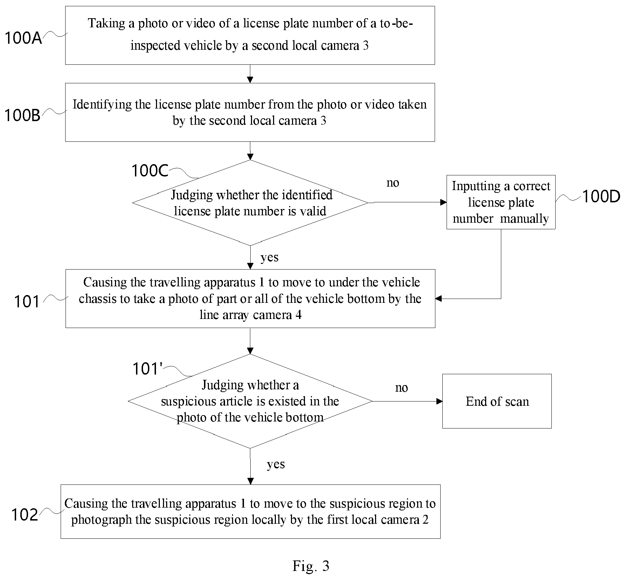

In addition, the present disclosure further provides a scanning method based on the foregoing vehicle chassis scanning system. In schematic embodiment, as shown in FIG. 3, the scanning method includes:
Step 101: causing the travelling apparatus 1 to move to under the vehicle chassis to take a photo of part or all of the vehicle bottom by the line array camera 4; and
Step 102: causing the travelling apparatus 1 to move to the suspicious region to photograph the suspicious region locally by the first local camera 2.
Step 101 and Step 102 are performed by the controller 5. The scanning system is convenient to use, can reduce the labor intensity of an operator, can select to obtain the photo of vehicle bottom for comprehensive inspection according to requirements, or can inspect the suspicious region at the bottom of the vehicle targetedly and focusedly, thereby enhancing the reliability of scanning and inspecting suspicious articles carried on the vehicle chassis and improving the inspection efficiency.

Moreover, after Step 101, the scanning system according to the present disclosure further includes:
Step 101': judging whether a suspicious article is existed in the photo of the vehicle bottom, and Step 102 is performed if the suspicious article is existed.

Step 101' may be performed by the controller 5, for example the industrial personal computer 54, or may further be performed by the operator. In the embodiment, overall scanning is performed firstly to position the suspicious article and then local inspection is performed, and thus the suspicious region can be positioned rapidly, the scanning efficiency of the suspicious article can be improved, and the scanning accuracy can be enhanced through focused observation.

Moreover, before Step 101, the scanning method according to present disclosure further includes:
Step 100A: taking a photo or video of a license plate number of a to-be-inspected vehicle by a second local camera 3;
Step 100B: identifying the license plate number from the photo or video taken by the second local camera 3; and
Step 100C: judging whether the identified license plate number is valid, the controller 5 stores if the identified license plate number is valid so as to correspond to a photo or video taken in the scanning process, and a valid license plate number is further obtained if the identified license plate number is invalid,.

Step 100B is performed by the controller 5. In Step 100C, automatic intelligent judgment may be performed by the controller 5, and judgment may further be performed by a manual method. Specifically, the controller 5 may judge whether the license plate number is valid according to whether the digits of the identified license plate number are correct, whether the naming rule of the license plate is met, whether the license plate number is in a list of license plates of vehicles declared for detection and whether the photo or video is complete. When the license plate number is obtained by the automatic intelligent method, Step 100B and Step 100C may be performed by the industrial personal computer 54. If necessary, the obtained license plate number may be transmitted to the control terminal 51 through the wireless communication module 8; or a video taken by the second local camera 3 may further be transmitted to the control terminal 51, and the control terminal 51 reads or judges the license plate number.

According to the embodiment, the valid license plate number of the to-be-inspected vehicle can be judged through the photo or video taken by the second local camera 3. Whether the identity of the to-be-inspected vehicle is suspicious is judged firstly. If the license plate number is not matched with the to-be-inspected vehicle, it is unnecessary to inspect the suspicious article and the vehicle is directly detained for subsequent identify verification, such that unnecessary inspection link may be omitted and waste of resources is avoided. By the method, a photo or video taken in the subsequent scanning and inspection process corresponds to information of the to-be-inspected vehicle conveniently, thereby improving the scanning and inspection efficiency and accuracy, and further enhancing the scanning and inspection efficiency.

In Step 100C, in case of judging that the identified license plate number is invalid, the step of further obtaining the valid license plate number includes:
providing another alternative license plate number to facilitate second judgment by the controller 5.

On this basis, if the conclusion of the controller 5 is still invalid after second judgment, the step of further obtaining the valid license plate number further includes:
adjusting a photographing angle, a position and/or a focal length of the second local camera 3 by the controller 5;
taking a photo or video of the license plate number of the to-be-inspected vehicle by the second local camera 3 again; and
identifying the license plate number by the controller 5 for the second time from the photo or video taken again by the second local camera 3.

In another embodiment, in Step 100C, in case of judging that the identified license plate number is invalid, the step of further obtaining the valid license plate number includes:

receiving a license plate number manually input by the operator according to a complete and clear photo directly.

The detailed mode of obtaining the license plate number of the to-be-inspected vehicle has been introduced in detail in the topic of the scanning system, and thus all steps of obtaining the license plate number in the topic of the scanning method may be referenced to the foregoing elaboration.

In a specific embodiment, the controller 5 includes an industrial personal computer 54 and a remote control terminal 51. In Step 101, taking the photo of part or all of the vehicle bottom by the line array camera 4 specifically includes:
Step 101A: reading photographing information of the line array camera 4 in real time by the industrial personal computer 54;
Step 101B: performing image stitching on the read photographing information by the industrial personal computer 54 to form a photo of part or all of the vehicle bottom; and
Step 101C: transmitting the photo of the vehicle bottom to the control terminal 51 by the industrial personal computer 54. Step 101A to Step 101C are not shown in the Figure.

After Step 101, the scanning method according to the present disclosure may further include:
causing the travelling apparatus 1 to move out of the vehicle chassis, and causing the travelling apparatus 1 to move to under the vehicle chassis when judging that a suspicious article is existed in the photo of the vehicle bottom.

In addition, to make the shot photo or video clearer, before taking the photo of part or all of the vehicle bottom by the line array camera 4, or locally photographing the suspicious region by the first local camera 2, the scanning method further includes: turning on the light supplementing lamp on the travelling apparatus 1.

The more specific scanning method has been elaborated in detail in the topic part of the scanning system, and the two parts may learn from each other.

A vehicle chassis scanning system and a scanning system according to the present disclosure are introduced above in detail. Principles and embodiments of the present disclosure are elaborated by specific embodiments, and the description of the above embodiments is merely intended to help understand the method of the present disclosure and the core concept thereof. It should be noted that those skilled in the art may also make several improvements and modifications without departing from the principles of the present disclosure which shall fall within the protection scope of the claims of the present disclosure.

## Claims

1. A vehicle chassis scanning system, comprising:
a travelling apparatus (1);
a line array camera (4) and a first local camera (2), arranged on the travelling apparatus (1); and
a controller (5), configured to cause the travelling apparatus (1) to move to under a vehicle chassis to photograph a vehicle bottom by the line array camera (4) to obtain a photo of part or all of a vehicle chassis, and cause the travelling apparatus (1) to move to a suspicious region to photograph the suspicious region locally by the first local camera (2).

2. The vehicle chassis scanning system according to claim 1, wherein the controller (5) is configured to judge whether a suspicious article is existed in the photo of the vehicle bottom, and cause the travelling apparatus (1) to move to the suspicious region corresponding to the suspicious article when judging that the suspicious article is existed in the photo of the vehicle bottom.

3. The vehicle chassis scanning system according to claim 1, wherein the controller (5) is configured to cause the travelling apparatus (1) to move to the suspicious region corresponding to a suspicious article when receiving a suspicious article instruction command in the photo of the vehicle bottom.

4. The vehicle chassis scanning system according to claim 1, further comprising a second local camera (3) arranged on the travelling apparatus (1), wherein the controller (5) is configured to identify a license plate number from a photo or a video taken by the second local camera (3) to judge whether the identified license plate number is valid.

5. The vehicle chassis scanning system according to claim 4, wherein
the controller (5) is configured to automatically judge whether the identified license plate number is valid, wherein a criterion for judgment comprising at least one of the following criteria: whether the digits of the license plate number is correct, whether the naming rule of the license plate is met, whether the license plate number is in a list of license plates of vehicles declared for detection and whether the photo or video is complete; or
the controller (5) is configured to judge whether the identified license plate number is valid according to a confirmation instruction input by a user, the user inputting an instruction for confirming whether the license plate number is valid according to whether the license plate number in the photo or video seen by naked eyes is consistent with the identified license plate number.

6. The vehicle chassis scanning system according to claim 1, wherein the first local camera (2) is arranged on a rotation axis of the travelling apparatus (1).

7. The vehicle chassis scanning system according to claim 1, wherein an angle compensation mechanism is arranged on the travelling apparatus (1) and is configured to perform angle compensation when the travelling apparatus (1) rotates, so as to maintain a photographing angle of the first local camera (2) unchanged when the travelling apparatus (1) rotates.

8. The vehicle chassis scanning system according to claim 7, wherein the angle compensation mechanism comprises a steering engine (6), the first local camera (2) being arranged at an output end of the steering engine (6), and the steering engine (6) being configured to drive the first local camera (2) to rotate reversely when the travelling apparatus (1) rotates, so as to maintain a photographing angle of the first local camera (2) unchanged.

9. The vehicle chassis scanning system according to claim 1, wherein the first local camera (2) is arranged at the top of the travelling apparatus (1), and/or the line array camera (4) is arranged at the rear of the travelling apparatus (1).

10. The vehicle chassis scanning system according to claim 1, further comprising a distance measuring sensor (7), the distance measuring sensor (7) being configured to detect whether a barrier is present above the travelling apparatus (1), and the controller (5) being configured to judge whether the travelling apparatus (1) enters under the vehicle chassis after receiving a detection signal of the distance measuring sensor (7).

11. The vehicle chassis scanning system according to claim 1, wherein the controller (5) comprises:
a control board (52), arranged on the travelling apparatus (1); and
a remote control terminal (51), configured to transmit a remote control signal to the control board (52) to control at least one of the motion trail and the posture transformation of the travelling apparatus (1) and the photographing angle of the first local camera (2).

12. The vehicle chassis scanning system according to claim 11, wherein the control terminal (51) comprises a display unit, the display unit being configured to receive and display the photo of the vehicle bottom taken by the line array camera (4) and a real-time video taken by the first local camera (2) and the second local camera (3).

13. The vehicle chassis scanning system according to claim 11, wherein the controller (5) further comprises a driver (53) and a driving mechanism, which are arranged on the travelling apparatus (1); and the travelling apparatus (1) comprises a travelling part, the travelling part comprising damping crawler belts arranged on a left side and a right side of a main body part, and the control board (52) being configured to transmit a motion instruction to the driver (53) after receiving the signal of the control terminal (51) so as to control the driving mechanism to drive the crawler belts on the two sides to move.

14. The vehicle chassis scanning system according to claim 1, wherein the travelling apparatus (1) is a mobile robot.

15. A scanning method based on the vehicle chassis scanning method according to claim 1, comprising:
causing the travelling apparatus (1) to move to under the vehicle chassis to take a photo of part or all of the vehicle bottom by the line array camera (4); and
causing the travelling apparatus (1) to move to the suspicious region to photograph the suspicious region locally by the first local camera (2).

16. The vehicle chassis scanning method according to claim 15, after taking the photo of part or all of the vehicle bottom by the line array camera (4), the method further comprising:
judging whether a suspicious article is existed in the photo of the vehicle bottom, and if the suspicious article is existed, causing the travelling apparatus (1) to move to the suspicious region to photograph the suspicious region locally by the first local camera (2).

17. The vehicle chassis scanning method according to claim 15, before causing the travelling apparatus (1) to move to under the vehicle chassis, the method further comprising:
taking a photo or video of a license plate number of a to-be-inspected vehicle by a second local camera (3);
identifying the license plate number from the photo or video taken by the second local camera (3); and
judging whether the identified license plate number is valid.

18. The vehicle chassis scanning method according to claim 17, wherein judging whether the identified license plate number is valid specifically comprises the following steps:
judging whether the license plate number is valid automatically according to at least one of whether the digits of the identified license plate number is correct, whether the naming rule of the license plate is met, whether the license plate number is in a list of license plates of vehicles declared for detection and whether the photo or video is complete; or
receiving an instruction input by a user for confirming whether the license plate number is valid according to whether the license plate number in the photo or video seen by naked eyes is consistent with the identified license plate number, and then judging whether the identified license plate number is valid according to the confirmation instruction input by the user.

19. The vehicle chassis scanning method according to claim 17, in case of judging that the identified license plate number is invalid, the method further comprising:
providing another identified alternative license plate number by the controller (5) to facilitate second judgment; or directly receiving the input correct license plate number by the controller (5).

20. The vehicle chassis scanning method according to claim 19, if the conclusion of the controller (5) is still invalid after second judgment, the method further comprising:
adjusting a photographing angle, a position and/or a focal length of the second local camera (3) by the controller (5);
taking a photo or video of the license plate number of the to-be-inspected vehicle by the second local camera (3) again; and
identifying the license plate number by the controller (5) for the second time from the photo or video taken again by the second local camera (3).

21. The vehicle chassis scanning method according to claim 15, wherein the controller (5) comprises an industrial personal computer (54) and a remote control terminal (51); and taking a photo of part or all of the vehicle bottom by the line array camera (4) specifically comprises the following steps:
reading photographing information of the line array camera (4) in real time by the industrial personal computer (54);
performing image stitching on the read photographing information by the industrial personal computer (54) to form a photo of part or all of the vehicle bottom; and
transmitting the photo of the vehicle bottom to the control terminal (51) by the industrial personal computer (54).

22. The vehicle chassis scanning method according to claim 15, after taking the photo of part or all of the vehicle bottom by the line array camera (4), the method further comprising:
causing the travelling apparatus (1) to move out of the vehicle chassis; and
causing the travelling apparatus (1) to move to under the vehicle chassis when judging that a suspicious article is existed in the photo of the vehicle bottom.

23. A vehicle chassis scanning system, comprising:
a travelling apparatus (1);
a first local camera (2), arranged on the travelling apparatus (1); and
a controller (5), configured to cause the travelling apparatus (1) to move to a suspicious region to photograph the suspicious region locally by the first local camera (2);
wherein an angle compensation mechanism is arranged on the travelling apparatus (1) and is configured to perform angle compensation when the travelling apparatus (1) rotates, so as to maintain a photographing angle of the first local camera (2) unchanged when the travelling apparatus (1) rotates.

24. The vehicle chassis scanning system according to claim 23, wherein the angle compensation mechanism comprises a steering engine (6), a main body of the steering engine (6) being fixed on the travelling apparatus (1), the first local camera (2) being arranged at an output end of the steering engine (6), and the steering engine (6) being configured to drive the first local camera (2) to rotate reversely when the travelling apparatus (1) rotates, so as to maintain a photographing angle of the first local camera (2) unchanged.

25. The vehicle chassis scanning system according to claim 23, wherein the first local camera (2) is arranged on a rotation axis of the travelling apparatus (1).
